# FASCICULE DE BREVET EUROPEEN

(11) **EP 1 604 598 B1**
(45) Date de publication et mention de la délivrance du brevet: **18.07.2007**
(21) Numéro de dépôt: 05356088.4
(22) Date de dépôt: 20.05.2005
(51) Int. Cl.: A47J 43/07

(54) **Boîtier d'appareil électroménager de préparation culinaire prévu pour être tenu à la main**
Haltbares Gehäuse für elektrisches Haushaltsgerät zur Nahrungszubereitung
Housing for household cooking appliance designed to be hand-held

(30) Priorité: 11.06.2004 FR 0406341
(43) Date de publication de la demande: 14.12.2005
(73) Titulaire: SEB S.A., 69130 Ecully (FR)
(72) Inventeur: Hamelin, Franck, 50490 Saint Sauveur Lendelin (FR)
(74) Mandataire: Kiehl, Hubert

(56) Documents cités:
- DE-C- 857 856
- DE-C- 10 030 034
- US-A- 5 522 659

## Description

La présente invention concerne le domaine technique général des appareils électroménagers de préparation culinaire tenus à la main dont une extrémité est destinée à être accouplée à un accessoire de travail, tel qu'un pied de mixage. La présente invention concerne plus particulièrement un boîtier dont une extrémité est munie d'un anneau d'accrochage permettant de suspendre le boîtier à un crochet pour son rangement.

Il est connu, du document DE 100 30 034, un appareil électroménager comportant un boîtier cylindrique intégrant un moteur dont l'arbre de sortie débouche à une extrémité longitudinale du boîtier pouvant être accouplée à un pied de mixage. Un tel appareil comporte un bouton de commande du moteur qui est disposé à l'extrémité du boîtier opposée à l'extrémité accouplée à l'accessoire et qui est entouré d'un anneau de protection évitant l'actionnement accidentel du bouton. Un tel anneau de protection permet également l'accrochage du boîtier à un crochet et renferme le fil d'alimentation du moteur de sorte que ce dernier ne vienne pas gêner l'actionnement du bouton. Cependant, un tel anneau de protection du bouton de commande de moteur ne permet pas une manipulation aisée du bouton et vient guider le fil d'alimentation dans l'axe du bras de sorte que ce dernier vient frotter contre l'avant bras ce qui peut occasionner une gêne.

L'invention qui suit vise à pallier ces inconvénients en proposant un boîtier d'appareil électroménager muni d'un anneau d'accrochage et équipé d'un système permettant de maintenir le fil d'alimentation électrique éloigné du bras et qui soit simple et économique à réaliser.

Le but de l'invention est atteint par un boîtier d'appareil électroménager de préparation culinaire selon la revendication 1.

Une telle caractéristique permet d'obtenir à faible coût, et dans un encombrement réduit, un anneau d'accrochage intégré au boîtier ainsi qu'un dispositif guide fil permettant de faire varier l'orientation de la sortie du câble d'alimentation du moteur de manière à ce que ce fil ne vienne pas gêner l'utilisateur. En d'autres termes, et pour des considérations de compacité, on confond en un même axe le centre d'orifice d'accrochage et l'axe de rotation du guide fil mobile pour assurer un meilleur confort d'utilisation.

Selon une autre caractéristique de l'invention, le corps du boîtier comporte des parois cylindriques délimitant l'orifice d'accrochage, le guide fil rotatif est guidé en rotation par ces parois cylindriques.

Une telle caractéristique permet d'optimiser la construction et l'encombrement du boîtier autour de l'orifice d'accrochage.

Selon d'autres modes particuliers de réalisation, le boîtier d'appareil électroménager selon l'invention peut comprendre l'une ou plusieurs des caractéristiques prises isolément ou selon toutes les combinaisons techniquement possibles :
- le guide fil rotatif comporte une bague de guidage s'insérant autour desdites parois cylindriques de l'orifice d'accrochage,
- la surface extérieure de la bague de guidage sert localement de support au fil d'alimentation,
- la surface extérieure de la bague de guidage est surmoulée d'un bourrelet dans lequel est noyé une partie du fil d'alimentation,
- le guide fil rotatif comporte un fourreau de protection entourant le fil d'alimentation au niveau de la sortie du boîtier,
- le bourrelet et le fourreau sont obtenus par moulage.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue de face d'un boîtier d'appareil électroménager selon un mode particulier de réalisation de l'invention ;
- la figure 2 est une vue de l'arrière du boîtier de la figure 1 ;
- la figure 3 est une vue similaire à la figure 1 dans laquelle la coquille supérieure est partiellement arrachée au niveau de l'anneau d'accrochage pour laisser apparaître le guide fil rotatif ;
- la figure 4 représente une vue en perspective du guide fil rotatif représenté seul ;
- la figure 5 est une vue de côté du boîtier de l'appareil en train d'être positionné sur un support mural.

Seuls les éléments nécessaires à la compréhension de l'invention ont été représentés. Pour faciliter la lecture des dessins, les mêmes éléments portent les mêmes références d'une figure à l'autre.

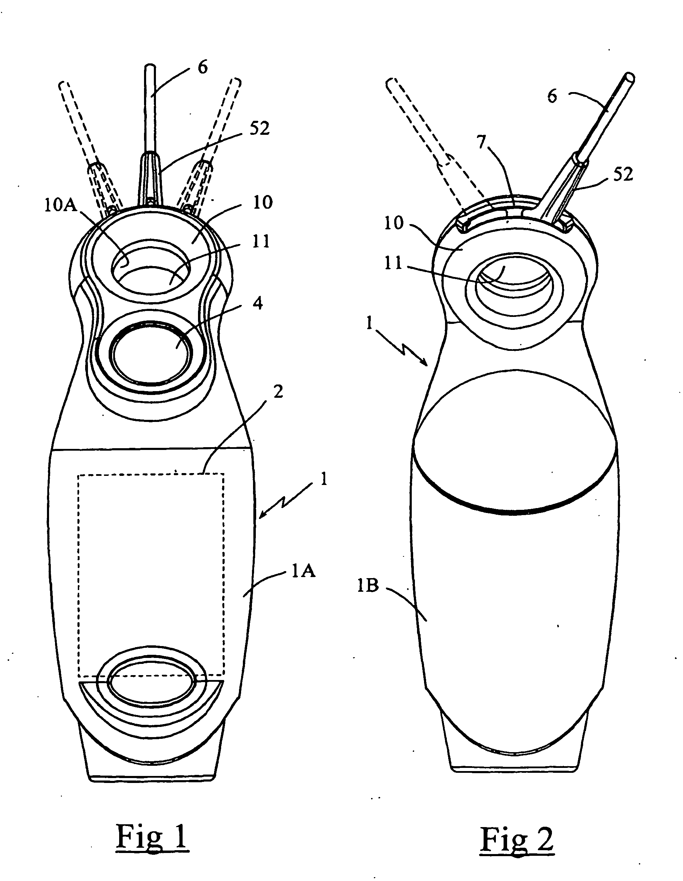

La figure 1 représente un boîtier 1 d'appareil électroménager comportant un corps de forme allongée dont une extrémité longitudinale est destinée à être accouplée à un accessoire, tel un accessoire batteur ou un pied de mixage.

Conformément aux figures 1 et 2, le boîtier 1 comporte un corps de section circulaire constitué essentiellement par deux coquilles 1 A et 1 B assemblées l'une sur l'autre. Les deux coquilles 1A,1B renferment, de manière connue en soi, un moteur électrique 2 assurant l'entraînement de l'outil de travail de l'accessoire lorsque ce dernier est accouplé au boîtier, le moteur 2 étant représenté schématiquement en pointillé sur la figure 1.

L'extrémité du boîtier 1 destinée à être accouplée à l'accessoire, est munie d'un bouton 3 de déverrouillage de l'accessoire et l'extrémité opposée du boîtier intègre, quant à elle, un anneau 10 muni d'un orifice d'accrochage 11 permettant l'insertion d'un crochet afin de suspendre le boîtier 1 pour son rangement. Le boîtier 1 comporte également un bouton de commande 4 du moteur électrique 2 disposé de façon adjacente à l'anneau d'accrochage 10.

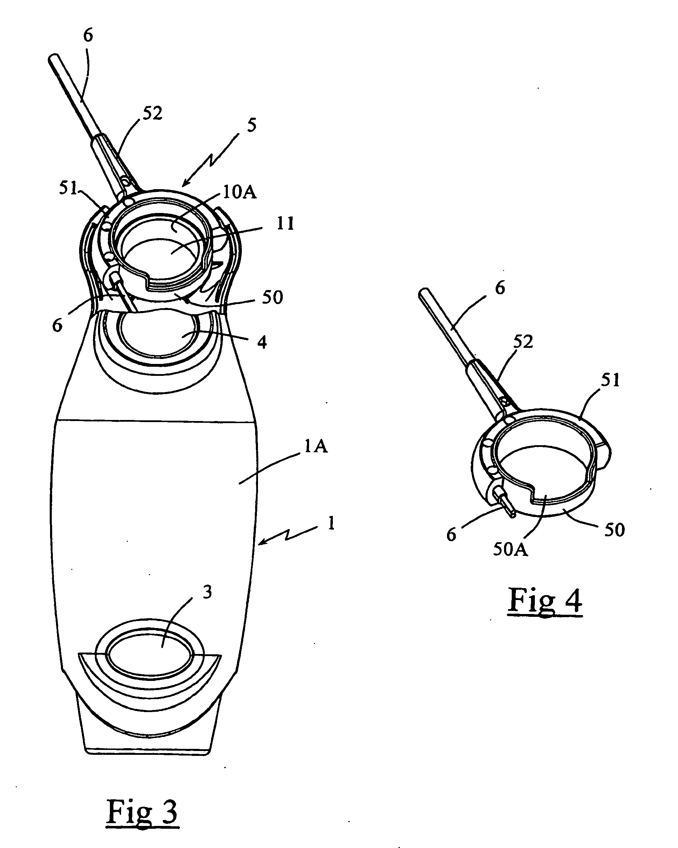

Plus particulièrement selon l'invention et conformément à la figure 3, le boîtier 1 renferme, autour de l'orifice d'accrochage 11, un guide fil rotatif 5 permettant de modifier latéralement l'orientation du fil d'alimentation 6 du moteur 2 au niveau de la sortie du boîtier 1. A cet effet, le boîtier 1 comporte à son extrémité longitudinale une fenêtre oblongue 7 dans laquelle la sortie du fil d'alimentation 6 peut débattre latéralement, comme on peut mieux le voir sur la figure 2.

Le guide fil rotatif 5, représenté isolément sur la figure 4, comporte une bague de guidage 50 dont le diamètre intérieur vient s'ajuster librement autour des parois cylindriques 10A délimitant l'orifice d'accrochage 11. La périphérie extérieure de la bague de guidage 50 est recouverte, sur un peu plus de la moitié de sa circonférence, d'un bourrelet 51 dans lequel est noyée une portion du fil d'alimentation 6 du moteur 2. Avantageusement, le fil d'alimentation 6 épouse la courbure de la bague de guidage 50 sur un quart de sa circonférence puis s'étend radialement à la bague de guidage 50 au niveau de la sortie du boîtier 1 en étant recouvert d'un fourreau 52 de protection sur les 2 ou 3 cm.

Le guide fil rotatif 5 est préférentiellement obtenu par moulage en plaçant dans un premier temps la bague de guidage 50 et le fil d'alimentation 6 dans un moule, puis en surmoulant l'ensemble pour obtenir le bourrelet 51 et le fourreau 52. Dans un tel procédé de fabrication du guide fil rotatif, la bague de guidage 5 présente l'avantage de servir d'élément support au fil d'alimentation 6 permettant ainsi de guider le fil dans le moule et d'assurer son positionnement correct lors de l'opération de surmoulage du bourrelet 51 et du fourreau 52.

Avantageusement, la bague de guidage 50 est munie d'une encoche 50A sur sa partie non recouverte par le bourrelet 51, les bords de cette encoche 50A venant buter contre un ergot, non représenté sur les figures, porté par la coquille 1 A du boîtier 1 pour limiter le débattement en rotation du guide fil 5 à un angle légèrement inférieur à 90°.

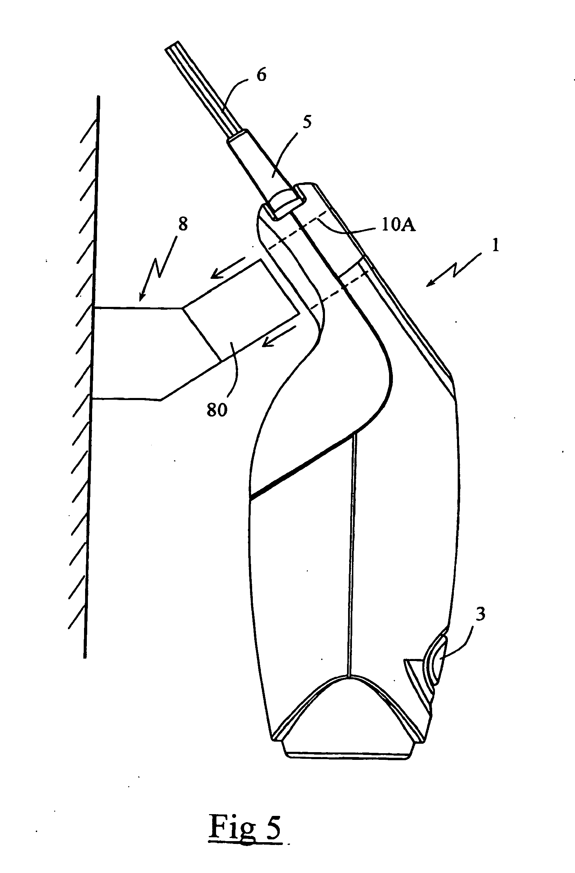

La figure 5 illustre un exemple de support mural 8 permettant de suspendre le boîtier 1. Le support mural 8 comporte une embase fixée au mur et comprend un pion cylindrique 80 de diamètre légèrement plus faible que le diamètre intérieur du trou d'accrochage 11 du boîtier 1. Le boîtier peut ainsi être suspendu de manière stable au support mural 8 en insérant l'anneau 11 d'accrochage autour du pion cylindrique 80.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, défini par les revendications ci-jointes.

## Revendications

1. Boîtier (1) d'appareil électroménager de préparation culinaire destiné à être accouplé à un accessoire, tel un pied de mixage, et prévu pour être tenu à la main, ledit boîtier (1) comportant un orifice d'accrochage (11) et un corps renfermant un moteur électrique (2) alimenté par un fil électrique (6), **caractérisé en ce que** ledit orifice d'accrochage (11) est intégré dans le corps du boîtier (1) à une extrémité de ce dernier et **en ce que** le corps du boîtier (1) renferme au niveau de ladite extrémité un guide fil rotatif (5) se déplaçant autour dudit orifice d'accrochage (11), ledit guide fil rotatif (5) permettant de modifier l'orientation de la sortie du fil (6) d'alimentation électrique du moteur (2).

2. Boîtier (1) d'appareil électroménager selon la revendication 1, **caractérisé en ce que** ledit corps du boîtier (1) comporte des parois cylindriques (10A) délimitant ledit orifice d'accrochage (11) et **en ce que** ledit guide fil rotatif (5) est guidé en rotation par lesdites parois cylindriques (10A).

3. Boîtier d'appareil électroménager selon la revendication 2, **caractérisé en ce** ledit guide fil rotatif (5) comporte une bague de guidage (50) s'insérant autour desdites parois cylindriques (10A) de l'orifice d'accrochage (11).

4. Boîtier d'appareil électroménager selon la revendication 3, **caractérisé en ce que** la surface extérieure de ladite bague de guidage (50) sert localement de support au fil d'alimentation (6).

5. Boîtier d'appareil électroménager selon l'une quelconque des revendications 3 à 4, **caractérisé en ce que** la surface extérieure de ladite bague de guidage (50) est surmoulée d'un bourrelet (51) dans lequel est noyé une partie du fil d'alimentation (6).

6. Boîtier d'appareil électroménager selon la revendication 5, **caractérisé en ce que** le guide fil rotatif (5) comporte un fourreau de protection (52) entourant le fil d'alimentation (6) au niveau de la sortie du boîtier (1).

7. Boîtier d'appareil électroménager selon les revendications 5 et 6, **caractérisé en ce que** le bourrelet (51) et le fourreau (52) sont obtenus par moulage.

## Claims

1. A household electrical appliance housing (1) for a household electrical appliance for preparing food, which housing is designed to be coupled to an accessory, such as a blender attachment, and is designed to be held in the hand, said housing (1) having a hooking orifice (11) and a body enclosing an electric motor (2) powered via an electrical cord (6), said housing being **characterized in that** said hooking orifice (11) is incorporated in the body the housing (1) at one end thereof, and **in that**, at said end, the body of the housing (1) encloses a rotary cord guide (5) mounted to move around said hooking orifice (11), said rotary cord guide (5) making it possible to modify the angular positioning of the outlet of the cord (6) for electrically powering the motor (2).

2. A household electrical appliance housing (1) according to claim 1, **characterized in that** said body of the housing (1) has cylindrical walls (10A) defining said hooking orifice (11), and **in that** said rotary cord guide (5) is guided as it pivots by said cylindrical walls (10A).

3. A household electrical appliance housing according to claim 2, **characterized in that** said rotary cord guide (5) comprises a guide ring (50) that fits around said cylindrical walls (10A) of the hooking orifice (11).

4. A household electrical appliance housing according to claim 3, **characterized in that** the outside surface of said guide ring (50) serves locally as a support for the power supply cord (6).

5. A household electrical appliance housing according to claim 3 or claim 4, **characterized in that** the outside surface of said guide ring (50) has a bead (51) overmolded thereon in which a portion of the power supply cord (6) is embedded.

6. A household electrical appliance housing according to claim 5, **characterized in that** the rotary cord guide (5) is provided with a protective sheath (52) surrounding the power supply cord (6) at the outlet from the housing (1).

7. A household electrical appliance according to claim 5 or claim 6, **characterized in that** the bead (51) and the sheath (52) are obtained by molding.

## Patentansprüche

1. Gehäuse (1) für ein Elektrohaushaltsgerät zur Nahrungszubereitung, das zum Ankoppeln an ein Zubehör wie einen Mixstab bestimmt und zum Halten mit der Hand vorgesehen ist, wobei das Gehäuse (1) eine Einhängeöffnung (11) und einen Körper aufweist, der einen Elektromotor (2) einschließt, der über eine elektrische Schnur (6) versorgt ist, **dadurch gekennzeichnet, dass** die Einhängeöffnung (11) an einem Ende des Gehäuses (1) in dessen Körper integriert ist und der Körper des Gehäuses (1) an diesem Ende eine drehbare Schnurführung (5) einschließt, die sich um die Einhängeöffnung (11) herum verlagert, wobei die drehbare Schnurführung (5) es ermöglicht, die Ausrichtung des Austritts der elektrischen Netzschnur (6) des Motors (2) zu verändern.

2. Gehäuse (1) für ein Elektrohaushaltsgerät nach Anspruch 1, **dadurch gekennzeichnet, dass** der Körper des Gehäuses (1) zylindrische Wände (10A) aufweist, die die Einhängeöffnung (11) begrenzen, und dass die drehbare Schnurführung (5) von den zylindrischen Wänden (10A) drehend geführt ist.

3. Gehäuse für Elektrohaushaltsgerät nach Anspruch 2, **dadurch gekennzeichnet, dass** die drehbare Schnurführung (5) einen Führungsring (50) aufweist, der sich um die zylindrischen Wände (10A) der Einhängeöffnung (11) einpasst.

4. Gehäuse für Elektrohaushaltsgerät nach Anspruch 3, **dadurch gekennzeichnet, dass** die Außenfläche des Führungsrings (50) lokal als Träger für die Netzschnur (6) dient.

5. Gehäuse für Elektrohaushaltsgerät nach einem der Ansprüche 3 bis 4, **dadurch gekennzeichnet, dass** die Außenfläche des Führungsrings (50) mit einem Wulst (51) überformt ist, in welchem ein Teil der Netzschnur (6) eingebettet ist.

6. Gehäuse für Elektrohaushaltsgerät nach Anspruch 5, **dadurch gekennzeichnet, dass** die drehbare Schnurführung (5) eine Schutzhülse (52) aufweist, die die Netzschnur (6) am Austritt aus dem Gehäuse (1) umgibt.

7. Gehäuse für Elektrohaushaltsgerät nach den Ansprüche 5 und 6, **dadurch gekennzeichnet, dass** der Wulst (51) und die Hülse (52) durch Formen erhalten werden.
